# EUROPEAN PATENT APPLICATION

(11) **EP 4 738 668 A1**
(43) Date of publication of application: **06.05.2026**
(21) Application number: 24831749.7
(22) Date of filing: 17.06.2024
(51) Int. Cl.: H02K 15/04

(54) **STATOR MANUFACTURING METHOD AND RESTRAINT JIG**

(30) Priority: 30.06.2023 JP 2023108051
(71) Applicant: NHK Spring Co., Ltd., Yokohama-shi, Kanagawa 236-0004 (JP)
(72) Inventor: KOBAYASHI Dai, Yokohama-shi Kanagawa 236-0004 (JP); OTSUKA Motoyuki, Yokohama-shi Kanagawa 236-0004 (JP)
(74) Representative: Oppermann, Frank
(86) International application number: PCT/JP2024/021875
(87) International publication number: WO 2025/004886

(57) **Abstract**

Provided is stator manufacturing method capable of suppressing twisting of projecting portions of segment coils along with circumferentially bending thereof. It positions a restraint jig 19 between axial base portions 11a of the projecting portions 11 adjacent to each other in a circumferential direction. The restraint jig 19 has grooves 25 corresponding to the base portions 11a adjacent in the circumferential direction. It relatively displaces coil ends 9a as tip ends of the projecting portions 11 with respect to the stator core 3 in the circumferential direction, to enter the base portions 11a of the projecting portions 11 into adjacent respective grooves 25 of the restraint jig 19 and bend the projecting portions 11 while the base portions are restrained in a radial direction of the stator core 3.

## Description

### FIELD OF THE INVENTION

The present invention relates to a method of manufacturing a stator of a rotating electrical machine such as a motor or a generator, and a restraint jig used for this method.

### BACKGROUND OF THE INVENTION

As a conventional method of manufacturing a stator, for example, as in Patent literature 1, there is one in which a plurality of segment coils are held in a stator core and projecting portions of the segment coils projecting from the stator core in the axial direction are bent in the circumferential direction.

In this manufacturing method, a rod-shaped restricting member is positioned between projecting portions adjacent to each other in the circumferential direction, and bending of the projecting portions are performed along the restricting member. With this, the size of the bending of the projecting portions are controlled or restricted.

In the conventional manufacturing method, twisting, however, may occur in the projecting portions of the segment coils along with the circumferentially bending thereof.

### CITATION LIST

### PATENT LITERATURE

PATENT LITERATURE 1: JP2015-2632A

### SUMMARY OF THE INVENTION

### PROBLEMS TO BE SOLVED BY THE INVENTION

The problem to be solved is that twisting occurs in projecting portions of segment coils along with circumferentially bending thereof.

### MEANS FOR SOLVING THE PROBLEM

The present invention provides a method of manufacturing a stator in which projecting portions of segment coils projecting in an axial direction from a stator core holding the segment coils are bent in a circumferential direction. This manufacturing method positions a restraint jig between axial base portions of the projecting portions adjacent to each other in the circumferential direction. The restraint jig has grooves corresponding to the base portions adjacent in the circumferential direction. Then, it relatively displaces tip ends of the projecting portions with respect to the stator core in the circumferential direction, to enter the base portions of the projecting portions into adjacent respective grooves of the restraint jig and bend the projecting portions while the base portions are restrained in a radial direction of the stator core.

In addition, the present invention provides a restraint jig used when projecting portions of segment coils projecting in an axial direction from a stator core holding the segment coils are bent in a circumferential direction. The restraint jig includes a jig body positioned between axial base portions of the projecting portions adjacent to each other in the circumferential direction, and grooves provided on the jig body and corresponding to the base portions adjacent in the circumferential direction in a state that the jig body is positioned between the base portions. The base portions of the projecting portions are entered into adjacent respective grooves to be restrained in a radial direction of the stator core when the projecting portions are bent.

### EFFECT OF THE INVENTION

According to the present invention, it is possible to suppress twisting of projecting portions of segment coils along with circumferentially bending thereof.

### BRIEF DESCRIPTION OF THE DRAWINGS

[FIG. 1] FIG. 1 is a perspective view of a stator supported by a support jig according to an embodiment of the present invention.
[FIG. 2] FIG. 2 is an enlarged perspective view illustrating part of FIG. 1.
[FIG. 3] FIG. 3 is a perspective view illustrating a stator supported by a support jig before bending of projecting portions of segment coils.
[FIG. 4] FIG. 4 is an enlarged perspective view illustrating part of FIG. 3.
[FIG. 5] FIGS. 5(A) to (F) are sectional views illustrating a method of manufacturing a stator.
[FIG. 6] FIG. 6 (A) is a sectional view illustrating a twisting device and restraint jigs according to the embodiment of the present invention, and FIG. 6 (B) is an enlarged view of part of FIG. 6 (A).
[FIG. 7] FIG. 7 is a perspective view illustrating a stator core and the restraint jigs.
[FIG. 8] FIG. 8 is an enlarged perspective view illustrating part of FIG. 7.
[FIG. 9] FIG. 9 is a perspective view illustrating the restraint jig of FIG. 7.
[FIG. 10] FIG. 10 is an exploded perspective view of the restraint jig of FIG. 9.
[FIG. 11] FIG. 11 is a plan view of the restraint jig of FIG. 9.
[FIG. 12] FIG. 12 is a front view of the restraint jig of FIG. 9 when viewed in a radial direction.
[FIG. 13] FIG. 13 is a perspective view illustrating a twisting process.
[FIG. 14] FIG. 14 is an enlarged sectional view of a groove and its periphery of FIG. 13.

### EMBODIMENT FOR CARRYING OUT THE INVENTION

The object of suppressing twisting of projecting portions of segment coils along with circumferentially bending thereof is accomplished by a restraint jig capable of bending the projecting portions while restraining the projecting portions in a radial direction.

A method of manufacturing a stator 1 manufactures a stator 1 in which projecting portions 11 of segment coils 9 projecting in an axial direction from a stator core 3 holding the segment coils 9 are bent in the circumferential direction.

In this manufacturing method, the restraint jig 19 is positioned between axial base portions 11a of the projecting portions 11 adjacent to each other in the circumferential direction before bending. The restraint jig 19 has grooves 25 corresponding to the base portions 11a adjacent in the circumferential direction.

Then, tip ends 9a of the projecting portions 11 are relatively displaced with respect to the stator core 3 in the circumferential direction, to enter the base portions 11a of the projecting portions 11 into the adjacent respective grooves 25 of the restraint jig 19 and bend the projecting portions 11 while the base portions are restrained in the radial direction of the stator core 3.

Although the restraint jig 19 does not need to be removed as long as the restraint jig is made of insulating material such as resin, it is preferable to use a spacer 23 if the restraint jig is removed.

If the spacer 23 is used, a jig body 21 having the grooves 25 is stacked on the spacer 23 being movable in the radial direction in the restraint jig 19. The spacer 23 is removed outward in the radial direction after the projecting portions 11 are bent. The jig body 21 is axially moved toward the stator core 3 in a space S caused by removal of the spacer 23 and then pulls the base portions 11a of the projected portions 11 out from the grooves 25 and is removed outward in the radial direction.

Although various forms may be adopted for the restraint jig 19, the restraint jig includes the jig body 21 and the grooves 25 as one embodiment.

The jig body 21 is positioned between the axial base portions 11a of the projecting portions 11 adjacent to each other in the circumferential direction. The grooves 25 are provided on the jig body 21.

The restraint jig 19 may be provided with the spacer 23 as described above.

The grooves 25 may be provided on respective sides of the jig body 21 in the circumferential direction. In this case, the grooves 25 on one side in the circumferential direction may be radially deviated from the grooves 25 on the other side in the circumferential direction.

Although the jig body 21 may have an appropriate planar shape, the jig body may be a fan shape in a plan view. In this case, outer peripheral portions 21a of the jig bodies 21 are preferably in contact with each other in the circumferential direction.

### EMBODIMENT

### [Stator]

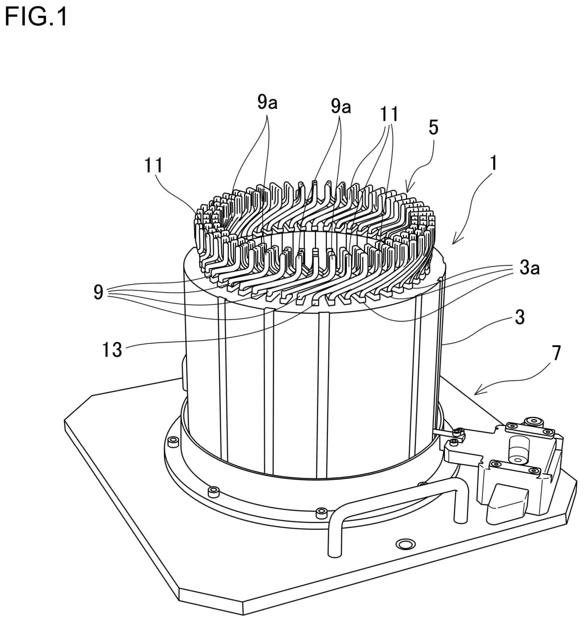

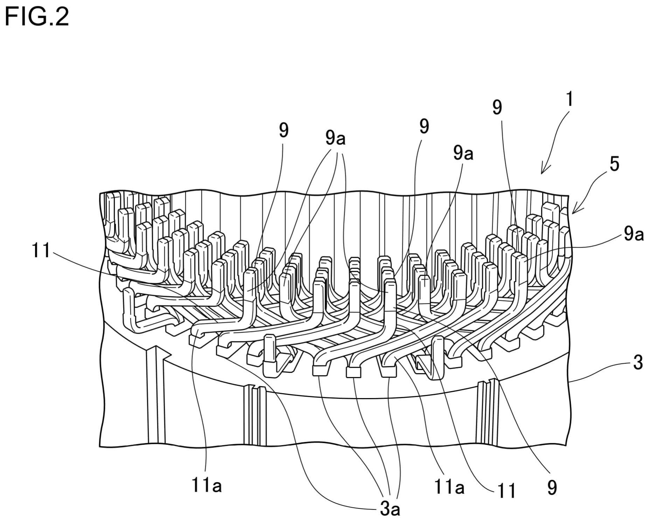

FIG. 1 is a perspective view of a stator supported by a support jig according to the embodiment of the present invention. FIG. 2 is an enlarged perspective view illustrating part of FIG. 1.

The stator 1 of FIG. 1 forms a rotating electrical machine together with a rotor not illustrated. The rotating electrical machine is configured as, for example, a 3-phase (U-phase, V-phase, and W-phase) AC permanent magnet synchronous motor with 8 poles, which drives driving wheels of an electric vehicle being not illustrated and generates electricity according to regenerative braking force from the driving wheels.

Here, FIG. 1 illustrates a state in which a stator coil 5 is incorporated in a stator core 3 supported by the support jig 7. In the state of FIG. 1, projecting portions 11 including coil ends 9a of each segment coil 9 are bent.

In this state, the coil ends 9a are joined by welding to form the stator coil 5. Thereafter, insulating coating is conducted to the coil ends 9a, and resin encapsulation is conducted to a portion of the stator coil 5 and the like to form the stator 1 of the rotating electrical machine. In the following description, one illustrated in FIG. 1 is regarded as the stator 1 for the explanation as a matter of convenience.

The stator 1 is provided with the stator core 3 and the stator coil 5. The stator core 3 is formed by stacking, for example, a plurality of annular electromagnetic steel sheets. The stator coil 5 is provided for three phases in the stator core 3 and is configured into a wave-winding shape. The stator coil 5 is composed of a plurality of the segment coils 9.

The stator core 3 is provided with a plurality of slots 3a at equal intervals in a circumferential direction (rotational direction of the rotating electrical machine). The segment coils 9 are inserted into the slots 3a with interposition of the insulating papers 13. With this, the plurality of the segment coils 9 are held by the stator core 3.

Each of the plurality of the segment coils 9 are formed into a U-shape, for example, into a hairpin shape, and the plurality of the segment coils are combined in the circumferential direction with respect to the stator core 3. The segment coils 9 are arranged along the circumferential direction, and are shifted to adjacent layers at apex portions of the hairpin shapes. In addition, the apex portions of the hairpin shapes are hidden by the support jig 7 on a lower side of FIG. 1 and are not illustrated.

As illustrated in FIGS. 1 and 2, the segment coil 9 is made of, for example, a rectangular flat wire having a rectangular cross section. The sectional shape of the segment coil 9 is, however, not particularly limited. In the segment coil 9, the projecting portions 11 including the coil ends 9a having no insulating layer are projected from the stator core 3 in an axial direction. The axial direction refers to a direction along an axis of the stator core 3.

The insulating layer is formed in an entire part other than the coil ends 9a of the segment coil 9. The projecting portions 11 of the present embodiment include portions inclined with respect to the axial direction. Accordingly, the projecting in this context means that the coil end 9a being a tip end and a base portion 11a of the projecting portion 11 are arranged so as to be shifted in the axial direction.

The base portion 11a is a region adjacent to a restraint jig 19 explained later in the circumferential direction in the projecting portion 11. The projecting portion 11 is bent by being twisted in the circumferential direction. The projecting portion 11 is, therefore, a tip region in which bending is performed in a leg portion of the hairpin shape of the segment coil 9.

A set of the coil ends 9a between adjacent layers are joined by welding in a state that a front face of one coil end 9a faces a back face of the other coil end 9a in a radial direction. A plurality of sets of joined coil ends 9a are arranged in the circumferential direction and the radial direction with respect to the stator core 3. The circumferential direction and the radial direction refer to a direction along an outer periphery of the stator core 3 and a direction along a diameter of the stator core, respectively.

### [Twisting process for stator]

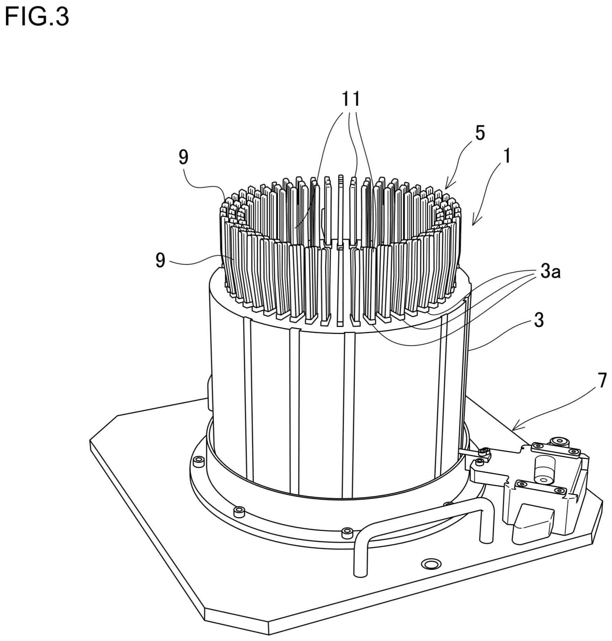

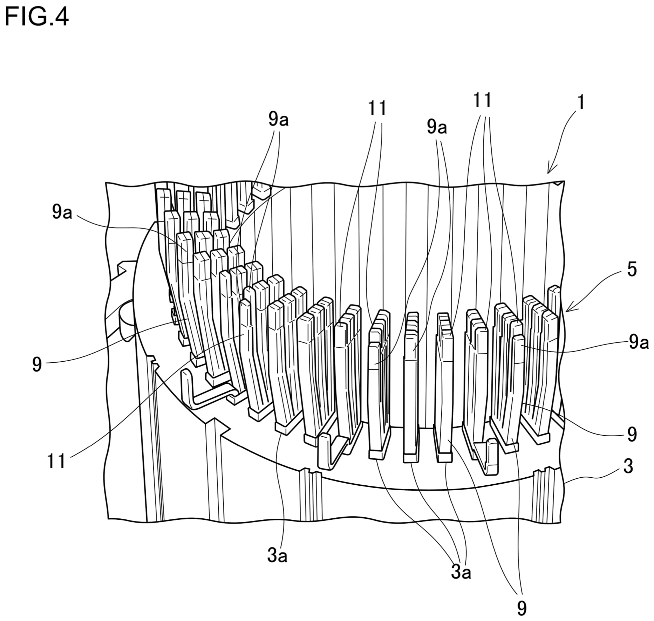

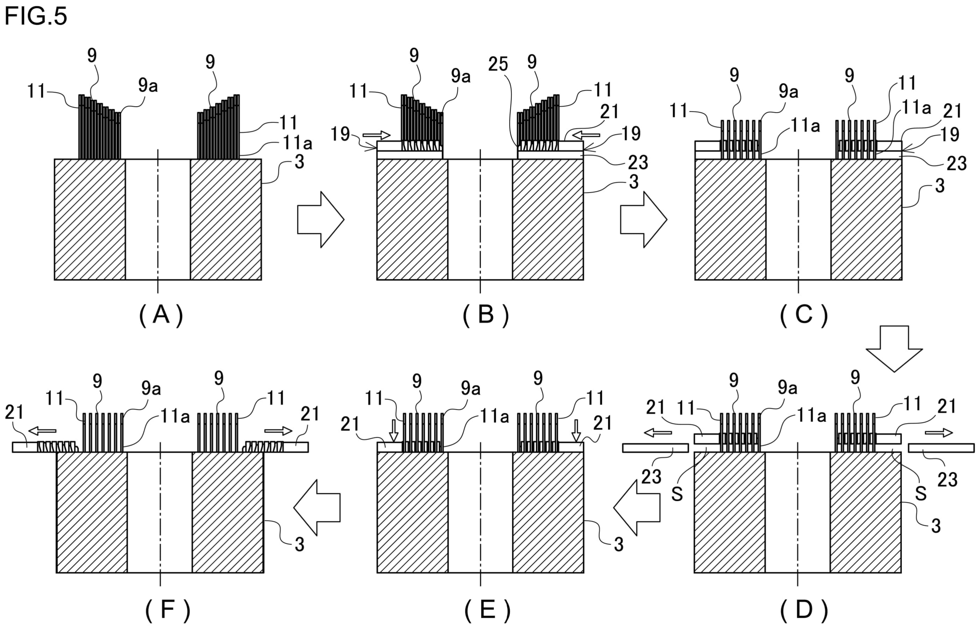

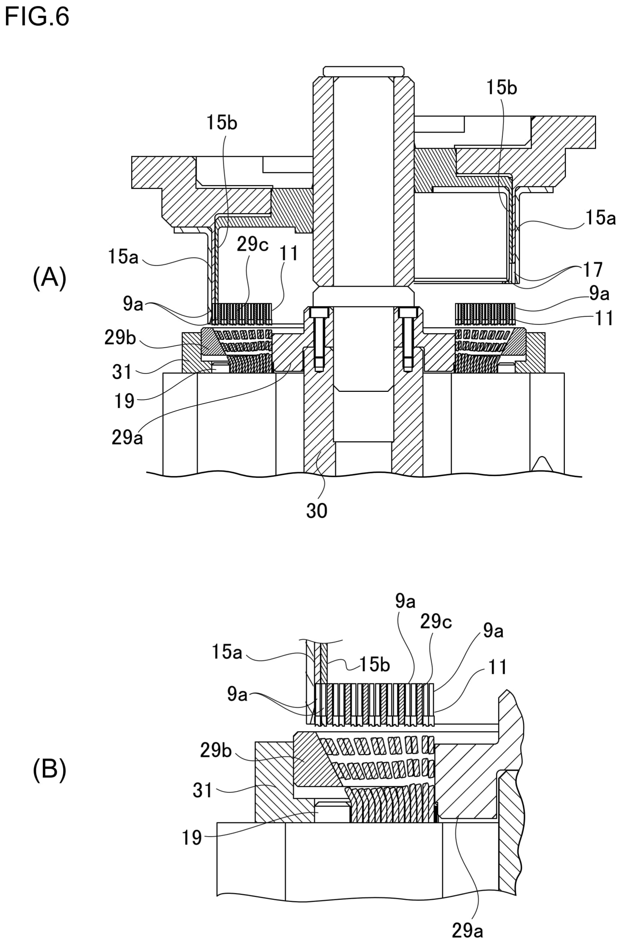

FIG. 3 is a perspective view of the stator supported by the support jig before bending of the projecting portions of the segment coils. FIG. 4 is an enlarged perspective view illustrating part of the stator core of FIG. 3. FIGS. 5(A) to (F) are sectional views illustrating a method of manufacturing the stator. FIG. 6(A) is a sectional view illustrating a twisting device and restraint jigs, and FIG. 6(B) is an enlarged view of part of FIG. 6(A).

In the method of manufacturing the stator 1 of the present embodiment, the projecting portions 11 of the segment coils 9 held by the stator core 3 as illustrated in FIGS. 3 and 4 are bent by a twisting process in the circumferential direction as illustrated in FIGS. 1 and 2. The coil ends 9a in the bent projecting portions 11 to be a set are joined in a subsequent process.

In the present embodiment, the projecting portions 11 to be bent are in 14 layers from a first one in an outermost periphery to a 14th one in an innermost periphery in the radial direction as illustrated in FIGS. 5(A) to (F). In addition, FIGS. 1 to 4 illustrate the projecting portions 11 are illustrated as six layers and the same configurations as those in FIG. 5(A) except for the number of layers. In the manufacturing method of the present embodiment, the projecting portions 11 will be explained as the 14 layers as illustrated in FIG. 5 with reference also to FIGS. 1 to 4 of the six layers.

Bending of the projecting portions 11 is performed in each layer by relatively circumferentially moving the coil ends 9a of the projecting portions 11 that are along the axial direction with respect to the stator core 3 while restraining the coil ends of the projecting portions.

The restraint and the circumferential movement of the coil ends 9a are performed by, for example, annular twisting jigs 15a and 15b in FIG. 6. As the twisting jigs 15a and 15b, those being provided with a plurality of teeth 17 in the circumferential direction may be used.

In this case, the twisting jigs 15a and 15b are lowered to restrain the coil ends 9a in the circumferential direction between adjacent teeth 17, the coil ends being tip ends of the projecting portions 11. This circumferential restraint is performed by axially inserting the coil end 9a between teeth 17 adjacent in the circumferential direction (left side in FIG. 6(A)). In this state, the twisting jigs 15a and 15b are relatively displaced relative to the stator core 3 in the circumferential direction to bend the projecting portions 11. In addition, various twisting jigs may be adopted as long as the twisting jigs 15a and 15b moves the coil ends 9a of the projecting portions 11 in the circumferential direction while restraining the coil ends of the projecting portions.

The bending of the projecting portions 11 of the first layer as the outermost periphery and the projecting portions 11 of the next second layer is performed at the same time by rotating the pair of the twisting jigs 15a and 15b reversely in the circumferential direction. After the bending, the twisting jigs 15a and 15b are raised (right side in FIG. 6(A)). Similarly, the projecting portions 11 are bent at the same time by two layers as in the third and the fourth layers and the fifth and the sixth layers from the first layer to the fourteenth layer. The bending of the projecting portions 11, however, may be performed individually for each layer.

When the projecting portions 11 are bent, the present embodiment suppresses twisting of the projecting portions 11 by using the restraint jigs 19 as illustrated in FIGS. 5(A) to (F).

First, the segment coils 9 are held in the stator core 3 as illustrated in FIG. 5(A). In this state, the projecting portions 11 are projected from the stator core 3 in the axial direction to be supported on the support jig 7 as illustrated in FIGS. 3 and 4. In addition, in the states illustrated in FIG. 3 to FIG. 5(A), gaps in the radial direction are formed between the projecting portions 11 of the adjacent layers. These gaps facilitate the bending of the projecting portions in the circumferential direction.

Next, as illustrated in FIG. 5(B), the restraint jigs 19 are positioned between the axial base portions 11a of the projecting portions 11 adjacent to each other in the circumferential direction of the stator core 3. In addition, FIG. 5(B) illustrates a state in which the restraint jigs 19 are disposed between the projecting portions 11 on the front side not illustrated and the projecting portions 11 on the far side illustrated. In FIG. 5(B), although the restraint jigs 19 are positioned between the base portions 11a in the radial direction, the insertion direction thereof are free and they may be positioned, for example, in the axial direction.

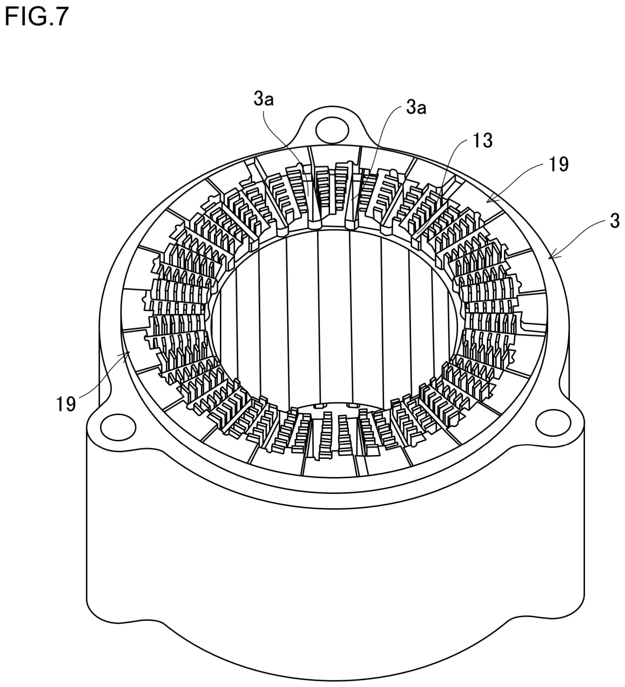

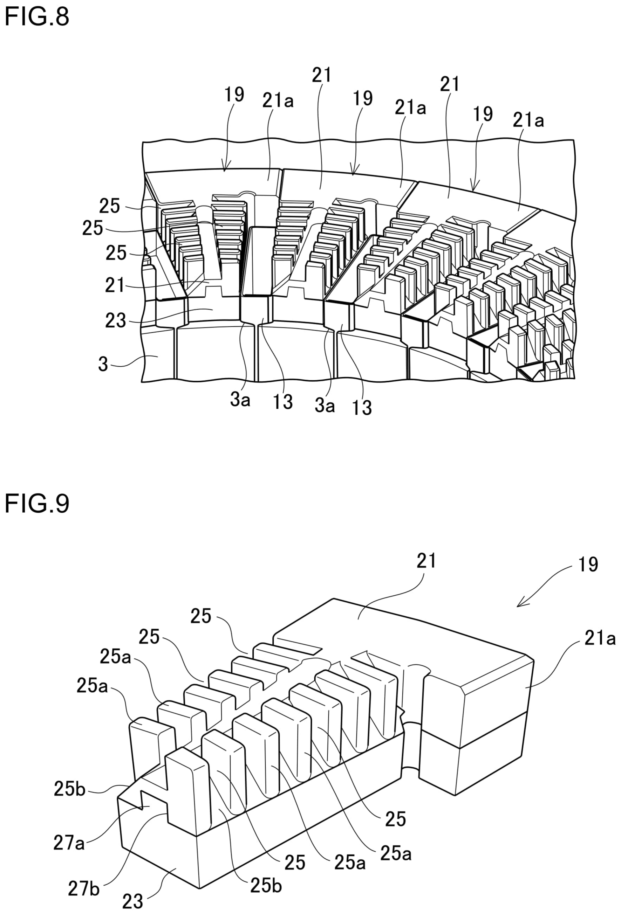

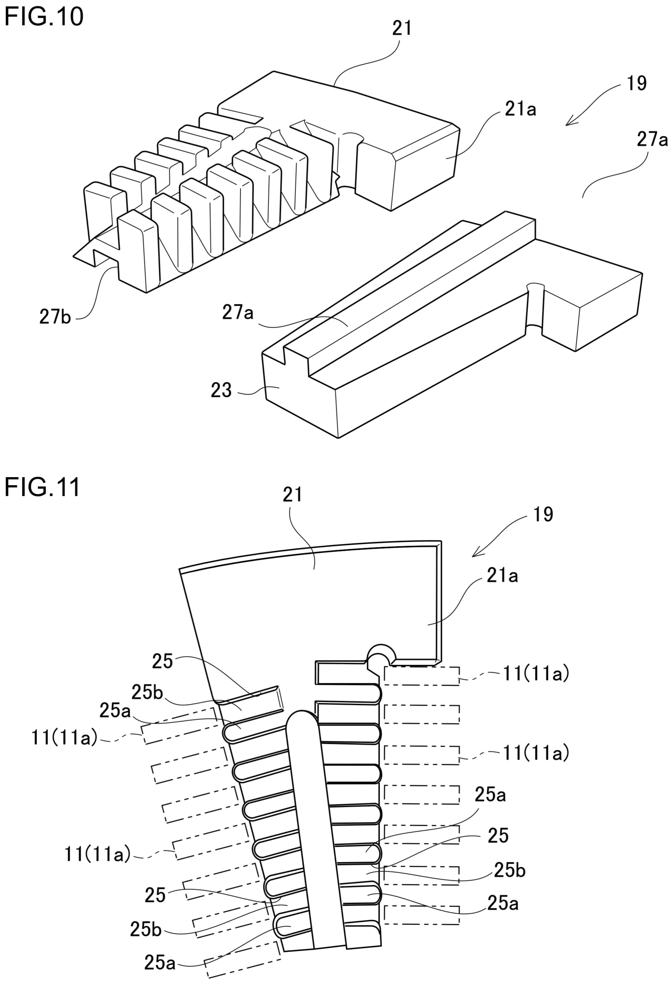

FIG. 7 is a perspective view illustrating the stator core 3 and the restraint jigs 19. FIG. 8 is an enlarged perspective view illustrating part of FIG. 7. FIGS. 9 to 12 are a perspective view, an exploded perspective view, a plan view, and a front view when viewed in the radial direction, illustrating the restraint jig 19 of FIG. 7.

As illustrated in FIGS. 7 to 12, the restraint jig 19 of the present embodiment is provided with a jig body 21 and a spacer 23. In addition, illustration of the projecting portions 11 is omitted for convenience in FIGS. 7 and 8.

The jig body 21 has a fan shape in a plan view, and corresponds to a shape between the projecting portions 11 adjacent to each other in the circumferential direction or the base portions 11a thereof. In addition, the planar shape of the jig body 21 may be arbitrarily set.

An outer peripheral portion 21a of the jig body 21 is located on an outer side in the radial direction with respect to the first layer of the projecting portions 11 on the outermost periphery in a state that the jig body is positioned between the base portions 11a of the adjacent projecting portions 11. The outer peripheral portion 21a extends to one side in the circumferential direction and is brought into contact with an outer peripheral portion 21a of an adjacent jig body 21. The jig bodies 21, therefore, have a configuration in which the outer peripheral portions 21a are in contact with each other in the circumferential direction. With this contact, the jig bodies 21 are positioned in the circumferential direction.

The jig body 21 is provided with the grooves 25. The grooves 25 are provided as grooves corresponding to the base portions 11a adjacent in the circumferential direction in a state that the restraint jig 19 is positioned between the base portions 11a of the projecting portions 11 adjacent to each other in the circumferential direction. The grooves 25 are arranged along the circumferential direction with respect to the base portions 11a of the projecting portions 11 adjacent in the circumferential direction. The grooves 25 may be formed by approximate linear grooves in the circumferential direction, arc-shaped grooves along the circumferential direction, or the like.

The grooves 25 located on one side in the circumferential direction and the grooves 25 located on the other side in the circumferential direction are disposed so as to be deviated in the radial direction, and correspond to the base portions 11a of the projecting portions 11 located on one side and the other side in the circumferential direction, respectively. The grooves 25 on one side in the circumferential direction are provided from an edge portion on one side of the jig body 21 to the center thereof in the circumferential direction. The grooves 25 on the other side in the circumferential direction are provided from an edge portion on the other side of the jig body 21 to the center thereof in the circumferential direction.

Each groove 25 is defined by wall portions 25a in the radial direction. Although the wall portions 25a extend in an approximate straight line shape in the circumferential direction in a plan view, it may be another planar shape such as a cylindrical shape. An interval (radial dimension of the groove 25) between the wall portions 25a corresponds to a radial dimension of the projecting portion 11 of the segment coil 9 before bending. Particularly, the radial dimension of the groove 25 is set to be the same as or slightly larger than the radial dimension of the projecting portion 11 of the segment coil 9.

A bottom face 25b of each groove 25 is inclined so as to be gradually close to the stator core 3 in the axial direction toward an outer side in the circumferential direction. The outer side in the circumferential direction is the edge portion side on one side in the groove 25 on one side in the circumferential direction, and is the edge portion side on the other side in the groove 25 on the other side in the circumferential direction.

The spacer 23 stacks the jig body 21 thereon and is movable in the radial direction. The spacer 23 of the present embodiment has a plate shape and has the same contour as the jig body 21 in a planar shape. The spacer 23, therefore, overlaps the jig body 21 while being positioned between the jig body 21 and the stator core 3 in the axial direction. In addition, the spacer 23 is not limited in shape as long as the jig body 21 may be stacked on the spacer.

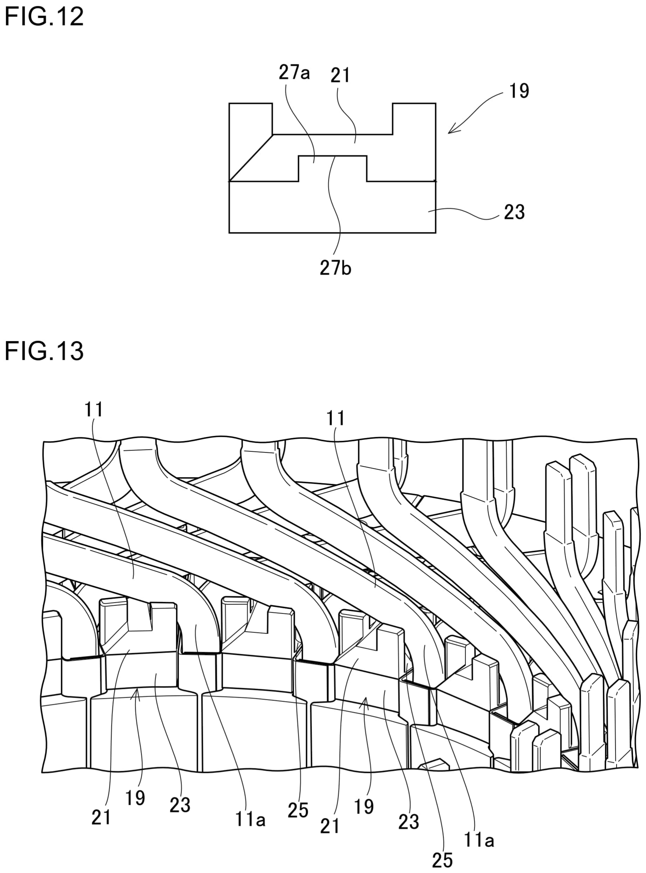

Circumferential deviation between the spacer 23 and the jig body 21 is suppressed by a projection 27a and a recess 27b along the radial direction as illustrated in FIG. 12. One of the projection 27a and the recess 27b (the projection 27a in the present embodiment) is provided on the spacer 23, and the other (the recess 27b in the present embodiment) is provided on the jig body 21. The projection 27a and the recess 27b are slidably engaged in the radial direction. It should be noted that the projection 27a may be provided entirely in the radial direction or may be provided partly in the radial direction.

After the restraint jigs 19 are positioned between the base portions 11a of the projecting portions 11 adjacent to each other in the circumferential direction, the twisting process is performed as illustrated in FIG. 5(C). It should be noted that FIG. 5(C) illustrates a state that the front-side projecting portions 11, which are not illustrated in FIG. 5(B), are bent by the twisting process to engage with the restraint jigs 19. The present embodiment conducts the twisting process while additional restraint jigs 29a to 29c are positioned at respective positions in addition to the restraint jigs 19 as illustrated in FIG. 6.

The additional restraint jigs 29a to 29c are located on a radially inner side, a radially outer side of the projecting portions 11, and between adjacent sets of the coil ends 9a. It should be noted that the additional restraint jigs 29a to 29c may be omitted.

The restraint jig 29a on the radially inner side has a disk shape attached to a shaft portion 30 passing a center of the stator core 3 in the axial direction, an outer peripheral face of which contacts the projecting portions 11 of the innermost peripheral layer in the radial direction. The restraint jig 29b on the radially outer side is formed into a ring shape, an inclined inner peripheral face of which contacts the projecting portions 11 of the outermost peripheral layer from the outer side in the radial direction. The restraint jigs 29c are formed into ring shapes and are located in gaps between set of coil ends 9a to be bent at the same time and adjacent sets of coil ends 9a. A ringshaped jig presser 31 is engaged with outer peripheries of the restraint jig 29b and the restraint jig 19.

In the restraint state using the restraint jig 19 and the additional restraint jigs 29a to 29c, the pair of the twisting jigs 15a and 15b that restrain the coil ends 9a of the projecting portions 11 are rotated reversely in the circumferential direction. With this, the two layers are twisted at the same time with respect to the coil ends 9.

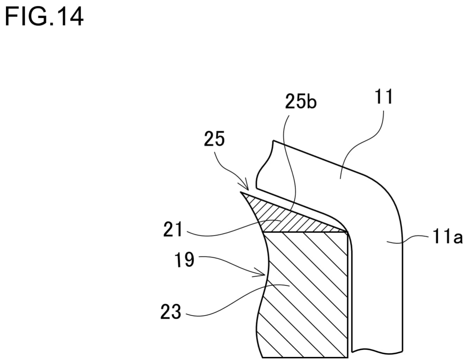

FIG. 13 is a perspective view illustrating the twisting process. FIG. 14 is an enlarged sectional view of the groove of FIG. 13 and a periphery thereof. In addition, FIG. 13 illustrates the twisting process of the 13th and the innermost peripheral 14th layers.

As illustrated in FIGS. 13 and 14, when the twisting process is performed, the edge portions of the grooves 25 of the jig body 21 of the restraint jig 19 contact against the base portions 11a of the projecting portions 11 in the circumferential direction. The projecting portions 11 are bent in the circumferential direction with the contacting portions as fulcrums.

With this bending, the base portions 11a of the projecting portions 11 enter the grooves 25 in the circumferential direction. As this result, the coil ends 9a being the tip ends of the projecting portions 11 are displaced relative to the stator core 3 in the circumferential direction, and the base portions 11a of the projecting portions 11 are inserted into the adjacent grooves 25 of the restraint jig 19, respectively.

With this, the base portions 11a of the projecting portions 11 are restrained in the radial direction by the wall portions 25a. The restraint is performed by engaging each radial side face of the base portion 11a of the projecting portion 11 with the wall portion 25a. The base portions 11a of the projecting portions 11 are, therefore, bent and the base portions 11a of the projecting portions 11 are prevented from being twisted around the axes along with the bending of the base portion 11a.

By suppressing the twisting of the base portions 11a, overall twisting of the projecting portions 11 is suppressed. In the present embodiment, since the restraint jigs 29c positioned between the sets of the coil ends 9a are further provided, the twisting of the protruding parts 11 is further surely suppressed.

Further, the present embodiment conducts the restraining from inside and outside in the radial direction using the restraint jigs 29a and 29b, so that the twisting of the projecting portions 11 is further surely suppressed.

In this way, the present embodiment bends the projecting portions 11 in the circumferential direction while suppressing the twisting of the projecting portions 11 including the base portions 11a. After the bending of the projecting portions 11 is completed, the bent projecting portions 11 are engaged with the grooves 25 of the restraint jigs 19, respectively.

In the present embodiment, the restraint jigs 19 are removed as illustrated in FIGS. 5(D) to 5(F). It should be noted that, if the restraint jigs 19 are made of insulating material such as resin, it is not necessary to remove the restraint jigs to form part of the stator 1. In this case, the restraint jig 19 may be configured that the jig body 21 and the spacer 23 are integrated.

The additional restraint jigs 29a and 29b and the jig presser 31 are configured to be removable by disassembling, respectively. The additional restraint jigs 29c should be pulled out in the axial direction.

As shown in FIG. 5(D), it removes the spacer 23 radially outward in removal of the restraint jig 19, first. The removal of the spacer 23 may be performed by radially drawing the spacer 23 out. At this time, since the grooves 25 of the jig body 21 are engaged with the base portions 11a of the bent projecting portions 11, the spacer 23 is surely moved relative to the jig body 21 and the stator core 3 to be pulled out in the radial direction.

Removing the spacer 23, a space S is provided between the jig body 21 and the stator core 3 in the axial direction. Using this space S, the jig body 21 is moved toward the stator core 3 in the axial direction as illustrated in FIG. 5(E).

Accordingly, the base portions 11a of the projecting portions 11 are pulled out from the grooves 25. As this result, the engagement between the jig body 21 and the projecting portions 11 is released, so that it is possible to remove the jig body 21 outward in the radial direction as illustrated in FIG. 5(F). This removal is performed by drawing out in the radial direction similarly to the spacer 23.

As mentioned above, the method of manufacturing the stator 1 of the present embodiment positions the restraint jig 19 between the axial base portions 11a of the projecting portions 11 adjacent to each other in the circumferential direction. The restraint jig 19 has the grooves 25 corresponding to the base portions 11a adjacent in the circumferential direction. Then, the coil ends 9a being the tip ends of the projecting portions 11 are relatively displaced with respect to the stator core 3 in the circumferential direction, to enter the base portions 11a of the projecting portions 11 into the respective adjacent grooves 25 of the restraint jig 19 and bend the projecting portions 11 while the base portions are restrained in the radial direction of the stator core 3.

It, therefore, suppresses twisting of the projecting portions 11 along with the circumferentially bending thereof. Further, the restriction using the grooves 25 in the radial direction also functions the radial positioning of the projecting portions 11, to surely bend the projecting portion 11.

Further, the restraint jig 19 is configured by stacking the jig body 21 having the grooves 25 on the spacer 23 that is movable in the radial direction. The spacer 23 is removed outward in the radial direction after the projecting portions 11 are bent, and the jig body 21 is axially moved toward the stator core 3 in the space S caused by the removal of the spacer 23 to pull the base portions 11a out from the grooves 25 and then is removed outward in the radial direction.

The restraint jig 19 is, therefore, easily and surely removed from the stator 1 in which the projecting portions 11 are bent. As this result, it is possible to set the material of the restraint jig 19 arbitrarily. It should be noted that the spacer 23 may be removed inward in the radial direction depending on the planar shape such as a rectangular plate shape or a rod shape. On the other hand, if the restraint jig 19 is made of the insulating material such as resin, it is not necessary to remove the restraint jig 19, to facilitate the manufacturing.

The spacer 23 has the simple configuration in which the jig body 21 is stacked thereon and is movable in the radial direction, to be easily removed.

The grooves 25 are provided on the both sides of the jig body 21 in the circumferential direction, and the grooves 25 on one side in the circumferential direction are radially deviated with respect to the grooves 25 on the other side in the circumferential direction. When bending the projecting portions 11 of the radially adjacent layers reversely in the circumferential direction, the twisting of the projecting portions 11 of the adjacent layers is, therefore, suppressed by the grooves 25 on the both sides in the circumferential direction of the jig body 21.

Further, the grooves 25 are inclined so that the bottom faces 25b are axially gradually close to the stator core 3 toward the outer side in the circumferential direction, to make the grooves deeper toward the outer side in the circumferential direction. As this result, the projecting portions 11 are held in the radial direction from the beginning of the bending of the projecting portions 11, to further surely suppress the twisting.

The jig body 21 has the fan shape in the plan view, and the outer peripheral portion 21a of the jig body is in contact with another in the circumferential direction. The jig body 21 is, therefore, easily installed in the cylindrical stator core 3.

### DESCRIPTION OF NUMERALS

- 1: STATOR
- 3: STATOR CORE
- 9: SEGMENT COIL
- 9a: COIL END (TIP END)
- 11: PROJECTING PORTION
- 11a: BASE PORTION
- 19: RESTRAINT JIG
- 21: JIG BODY
- 21a: OUTER PERIPHERAL PORTION
- 23: SPACER
- 25: GROOVE
- 25b: BOTTOM FACE
- S: SPACE

## Claims

1. A method of manufacturing a stator in which projecting portions of segment coils projecting in an axial direction from a stator core holding the segment coils are bent in a circumferential direction, comprising:
positioning a restraint jig between axial base portions of the projecting portions adjacent to each other in the circumferential direction, the restraint jig having grooves corresponding to the base portions adjacent in the circumferential direction; and
relatively displacing tip ends of the projecting portions with respect to the stator core in the circumferential direction, to enter the base portions of the projecting portions into adjacent respective grooves of the restraint jig and bend the projecting portions while the base portions are restrained in a radial direction of the stator core.

2. The method of manufacturing a stator according to claim 1, wherein
the restraint jig is configured by stacking a jig body having the grooves on a spacer movable in the radial direction,
the spacer is removed outward in the radial direction after the projecting portions are bent, and
the jig body is axially moved toward the stator core in a space caused by removal of the spacer to pull the base portions out from the grooves and then is removed outward in the radial direction.

3. A restraint jig used when projecting portions of segment coils projecting in an axial direction from a stator core holding the segment coils are bent in a circumferential direction, comprising:
a jig body positioned between axial base portions of the projecting portions adjacent to each other in the circumferential direction; and
grooves provided on the jig body and corresponding to the base portions adjacent in the circumferential direction in a state that the jig body is positioned between the base portions, wherein
the base portions of the projecting portions are entered into adjacent respective grooves to be restrained in a radial direction of the stator core when the projecting portions are bent.

4. The restraint jig according to claim 3, further comprising:
a spacer stacking the jig body thereon and being movable in the radial direction.

5. The restraint jig according to claim 3 or 4, wherein
the grooves are provided on respective sides of the jig body in the circumferential direction, and the grooves on one side in the circumferential direction is radially deviated with respect to the grooves on the other side in the circumferential direction.

6. The restraint jig according to claim 5, wherein
the grooves are inclined so that bottom faces thereof are gradually close to the stator core in the axial direction toward outer sides in the circumferential direction.

7. The restraint jig according to claim 3 or 4, wherein
the jig body has a fan shape in a plan view, an outer peripheral portion of which is in contact with another in the circumferential direction.
